Europäisches Patentamt

European Patent Office

Office européen des brevets

(19)

(11) Veröffentlichungsnummer: **0 099 970**
**B1**

(12) # EUROPÄISCHE PATENTSCHRIFT

(45) Veröffentlichungstag der Patentschrift:
**11.09.85**

(51) Int. Cl.⁴: **H 02 B 1/24**

(21) Anmeldenummer: **83105011.7**

(22) Anmeldetag: **20.05.83**

(54) Schaltanlage.

(30) Priorität: **30.06.82 CH 3994/82**

(43) Veröffentlichungstag der Anmeldung:
**08.02.84 Patentblatt 84/6**

(45) Bekanntmachung des Hinweises auf die Patenterteilung:
**11.09.85 Patentblatt 85/37**

(84) Benannte Vertragsstaaten:
**CH DE FR IT LI SE**

(56) Entgegenhaltungen:
**US - A - 4 247 787**

(73) Patentinhaber: **BBC Aktiengesellschaft Brown, Boveri & Cie., Haselstrasse, CH-5401 Baden (CH)**

(72) Erfinder: **Blahous, Leopold, Dr., Lindenhof 8, CH-5430 Wettingen (CH)**
Erfinder: **Köppl, Georg, Waldmatt 15, CH-5242 Birr (CH)**

EP 0 099 970 B1

## Beschreibung

Die Erfindung betrifft eine Schaltanlage, wie sie in der EP-A1-0 079 628 beschrieben ist und die Vertragsstaaten CH, DE, FR, LI und SE zum Stand der Technik gehört (Art. 54 (3), (4) EPÜ).

Bei dieser Anlage ist jeder der n über unterbrechbare Stromzweige in Form eines Ringes geschalteten Knotenpunkte über Brückenzweige mit mindestens zwei der anderen Knotenpunkte verbindbar. Jeder dieser Brückenzweige weist zwei Trennschalter und einen zwischen diesen Trennschaltern angeordneten und diesen Brückenzweigen gemeinsamen Leistungsschalter auf. Hierdurch ist zwar mit geringem apparativem Aufwand bei gleichzeitig kleinem Platzbedarf eine hohe Redundanz der Schaltanlage bei Ausfall einer Schaltstelle in einem der die Knotenpunkte ringförmig verbindenden Schaltzweige oder bei Ausfall eines der Knotenpunkte selbst gegeben, jedoch lassen sich die intakten Knotenpunkte im allgemeinen nur unter erheblicher Veränderung der ursprünglichen Ringstruktur miteinander verbinden.

Es ist daher Aufgabe der Erfindung, die Schaltanlage derart weiterzubilden, daß bei Nichtverfügbarkeit mindestens eines der Knotenpunkte oder mindestens einer der Schaltstellen, welche in den die Knotenpunkte verbindenden Stromzweigen vorgesehen sind, die noch verfügbaren Knotenpunkte in Form eines Ringes schaltbar sind, dessen Struktur in den verfügbaren Bereichen der Schaltanlage gegenüber der entsprechenden Struktur des Ringes in der voll verfügbaren Anlage nahezu unverändert ist.

Diese Aufgabe wird durch die im Patentanspruch 1 angegebenen Merkmale gelöst.

Die erfindungsgemäße Schaltanlage zeichnet sich dadurch aus, daß zwei beliebige Knotenpunkte der Anlage im Bedarfsfall miteinander verbunden werden können, so daß bei Ausfall einer der Schaltstellen, welche in den die Knotenpunkte verbindenden Stromzweigen vorgesehen sind, oder bei Ausfall eines Knotenpunktes durch Betätigung von lediglich zwei bzw. vier Trennschaltern und einem Leistungsschalter der in der ungestörten Schaltanlage vorgesehene Ring bis auf die freigeschalteten, nicht verfügbaren Teile erhalten bleibt. Abgesehen von der Freischaltung der nicht verfügbaren Anlagenteile brauchen daher im Ring keine weiteren Schaltungen vorgenommen zu werden.

Es empfiehlt sich, die erfindungsgemäße Schaltanlage gemäß den kennzeichnenden Merkmalen von Patentanspruch 2 weiterzubilden, da eine derartige Anlage besonders einfach und übersichtlich aufgebaut ist.

Ist die erfindungsgemäße Schaltanlage gemäß den kennzeichnenden Merkmalen von Patentanspruch 3 beschaffen, so zeichnet sich eine solche Anlage darüber hinaus noch durch eine besonders kompakte Bauform aus, was insbesondere bei deren Gestaltung als gasisolierte, gekapselte Schaltanlage von Vorteil ist.

Wird die erfindungsgemäße Schaltanlage gemäß den kennzeichnenden Merkmalen von Patentanspruch 4 ausgebildet, so ist sie mit besonderem Vorteil als Freiluftschaltanlage einzusetzen.

Die gemäß den kennzeichnenden Merkmalen von Patentanspruch 5 weitergebildete erfindungsgemäße Schaltanlage zeichnet sich durch doppelte Redundanz aus. Bei dieser Anlage dürfen zwei beliebige Knotenpunkte oder zwei beliebige Schaltstellen nicht verfügbar sein, und dennoch läßt sich ein größtmöglicher Ring immer wieder herstellen.

Nachfolgend sind Ausführungsbeispiele der Erfindung anhand der Zeichnung in vereinfachter Form dargestellt. Hierbei zeigt

Fig. 1 ein Schaltschema einer erfindungsgemäßen Schaltanlage mit einer doppelt redundanten Ringschaltung von sechs Knotenpunkten, welche über zwölf Doppeltrenn- und zwei Leistungsschalter miteinander verbindbar sind;

Fig. 2 eine Seitenansicht eines geschnittenen Teils der Schaltanlage gemäß Fig. 1, bei der die Doppeltrenn- und Leistungsschalter als gekapselte gasisolierte Komponenten ausgebildet sind, und

Fig. 3 eine Seitenansicht eines der Doppeltrennschalter der Schaltanlage gemäß Fig. 1, bei der die Doppeltrennschalter in Freilufttechnik ausgeführt sind.

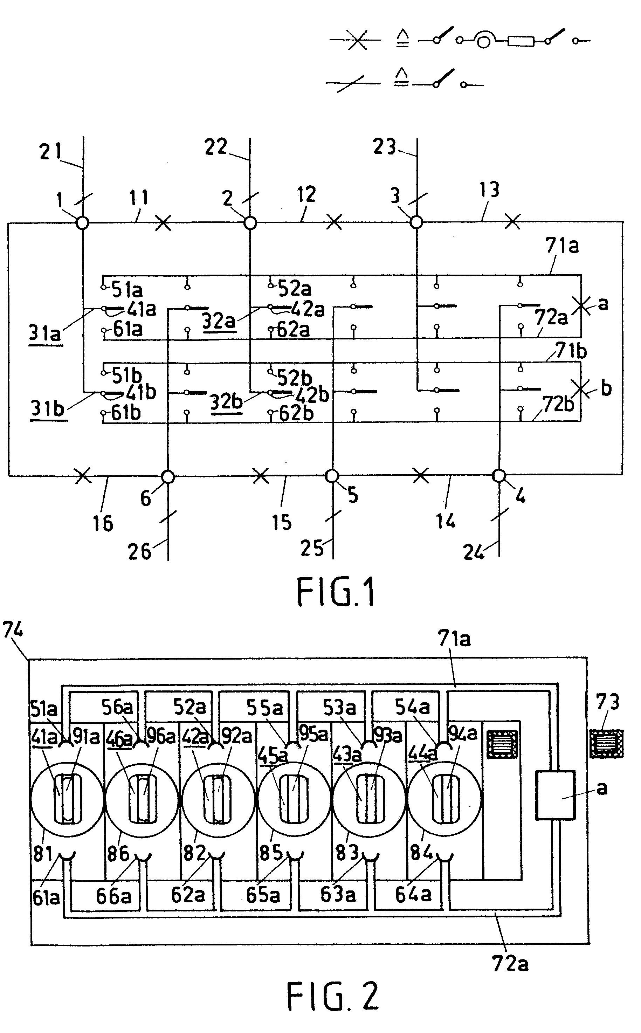

In allen Figuren sind gleiche Teile mit gleichen Bezugszeichen versehen. Das in Fig. 1 dargestellte Schaltschema der erfindungsgemäßen Schaltanlage weist Knotenpunkte 1, 2, 3, 4, 5 und 6 auf. Diese Knotenpunkte sind ringförmig geschaltet und längs des Ringumfanges aufeinanderfolgend numeriert.

Jeder der Knotenpunkte 1 bis 6 grenzt an zwei benachbarte Knotenpunkte, mit denen er mittels zweier der Stromzweige 11, 12, 13, 14, 15 und 16 verbunden ist, an. In jedem der Stromzweige 11 bis 16 ist eine durch ein Kreuz gekennzeichnete Schaltstelle vorgesehen. Jede Schaltstelle kann aus einer Serienschaltung eines Trennschalters mit einem Leistungsschalter, einem Stromwandler und einem weiteren Trennschalter bestehen. An den Knotenpunkten 1 bis 6 befinden sich Stromabgänge und -einspeisungen 21, 22, 23, 24, 25 und 26. In jedem Stromabgang bzw. in jeder Stromeinspeisung sind ein lediglich symbolisch durch einen Querstrich bezeichneter Trennschalter sowie gegebenenfalls ein Überspannungsableiter und ein Erdungsschalter vorgesehen.

Die Knotenpunkte 1 bis 6 sind darüber hinaus aber auch über im Inneren des Ringes dargestellte Leistungsschalter a bzw. b und Doppeltrennschalter 31a bzw. 31b, 32a bzw. 32b, 33a bzw. 33b, 34a bzw. 34b, 35a bzw. 35b, 36a bzw. 36b verbindbar. Von den Doppeltrennschaltern sind aus Gründen der Übersichtlichkeit nur die mit den Knotenpunkten 1 und 2 verbundenen mit Bezugszeichen versehen. Die Knotenpunkte 1, 2, . . ., 6 sind der Reihe nach mit beweglichen Mittelkontakten 41a bzw. 41b, 42a bzw. 42b, 43a bzw. 43b, 44a bzw. 44b, 45a bzw. 45b, 46a bzw. 46b der Doppeltrennschalter verbunden. Ebenfalls aus Gründen der Übersichtlichkeit sind lediglich die Mittelkontakte der Doppeltrennschalter 31a, 31b, 32a und 32b bezeichnet. Feststehende Außenkontakte 51a, 52a, 53a, 54a, 55a, 56a, von denen nur die Kontakte 51a und 52a mit Bezugszeichen versehen sind, der Doppeltrennschalter 31a, 32a, 33a, 34a, 35a und 36a sind über eine Anschlußleitung 71a und einen in Fig. 1 nicht dargestellten Stromwandler mit einem der Kontakte des Leistungsschalters a verbunden, während feststehende Außenkontakte 61a, 62a, 63a, 64a, 65a und 66a, von denen ebenfalls nur die Kontakte 61a und 62a mit Bezugszeichen versehen sind, über eine Anschlußleitung 72a mit dem anderen der beiden Kontakte des Leistungsschalters a in Verbindung stehen. Entsprechend sind Außenkontakte 51b, 52b, ... der Doppeltrennschalter 31b, 32b, ... über eine Anschlußleitung 71b und einen in Fig. 1 nicht dargestellten Stromwandler mit einem der beiden Kontakte des Leistungsschalters b und Außenkontakte 61b, 62b, ... der Doppeltrennschalter 31b, 32b, ... über eine Anschlußleitung 72b mit dem anderen der beiden Kontakte des Leistungsschalters b verbunden. Die Mittelkontakte 41a bzw. 41b, ... aller Doppeltrennschalter 31a bzw. 31b, ... sind derart beschaffen, daß sie entweder mit dem einen oder dem anderen Außenkontakt 51a oder 61a bzw. 51b oder 61b, ... oder mit keinem von beiden Außenkontakten in Eingriff bringbar sind.

Die Wirkungsweise einer derartigen Anlage ist nun wie folgt: Im normalen Betriebszustand der Schaltanlage werden die in den Stromzweigen 11 bis 16 des Ringes angeordneten Schaltstellen geschlossen und die Leistungsschalter a und b sowie die Doppeltrennschalter 31a bzw. 31b, ... 36a bzw. 36b, ... offen sein. Bei Nichtverfügbarkeit einer der in den Stromzweigen 11, ..., 16 vorgesehenen Schaltstellen können durch Schließen eines der Leistungsschalter a bzw. b sowie zweier mit diesem Leistungsschalter verbundener Doppeltrennschalter 31a, 32a, ..., 36a bzw. 31b, 32b, ..., 36b die nicht verfügbaren Schaltstellen überbrückt und kann der ursprüngliche Ring wiederhergestellt werden. Fällt nun noch eine weitere Schaltstelle im Ring aus, so kann in entsprechender Weise über den anderen der beiden Leistungsschalter und zwei mit diesem Leistungsschalter verbundene Doppeltrennschalter der ursprüngliche Ring wiederhergestellt werden. Ist beispielsweise die im Stromzweig 11 vorgesehene Schaltstelle etwa wegen Wartungsarbeiten nicht verfügbar, so lassen sich die hiervon betroffenen Knotenpunkte 1 und 2 durch Schließen der Kontakte 41a und 61a des Doppeltrennschalters 31a und 42a und 52a des Doppeltrennschalters 32a und nachfolgendes Schließen des Leistungsschalters a miteinander verbinden. Ist nun noch eine weitere im Ring vorgesehene Schaltstelle, etwa die im Stromzweig 13 vorgesehene, nicht verfügbar, so läßt sich in entsprechender Weise durch Schließen der in der Fig. 1 nicht bezeichneten Doppeltrennschalter 33b und 34b sowie des Leistungsschalters b wieder der ursprüngliche Ring herstellen.

In Fig. 2 ist ein Teil der Schaltanlage gemäß Fig. 1 räumlich dargestellt. Hierbei sind die Doppeltrennschalter 31a, 32a, ..., 36a und der Leistungsschalter a als gekapselte gasisolierte Komponenten ausgebildet und die Kapselung dieser Komponenten ist in Blickrichtung entfernt. Die Anschlußleitungen 71a und 72a sind als Sammelschienen ausgebildet und sind ebenso wie ein Stromwandler 73 in einem mit Isoliergas, wie etwa SF6, gefüllten Metallgehäuse 74 angeordnet. Die Knotenpunkte 1, 2, ..., 6 sind mit den Mittelkontakten 41a, 42a, ..., 46a jedes Doppeltrennschalters 31a, 32a, ..., 36a etwa über Rohrgaskabel 81, 82, ..., 86 verbunden. Die Mittelkontakte weisen jeweils ein bewegliches Kontaktteil 91a, 92a, ..., 96a auf, welches über einen nicht dargestellten Antrieb mit einem der feststehenden Außenkontakte 51a oder 61a, 52a oder 62a, ..., 56a oder 66a in Eingriff bringbar ist.

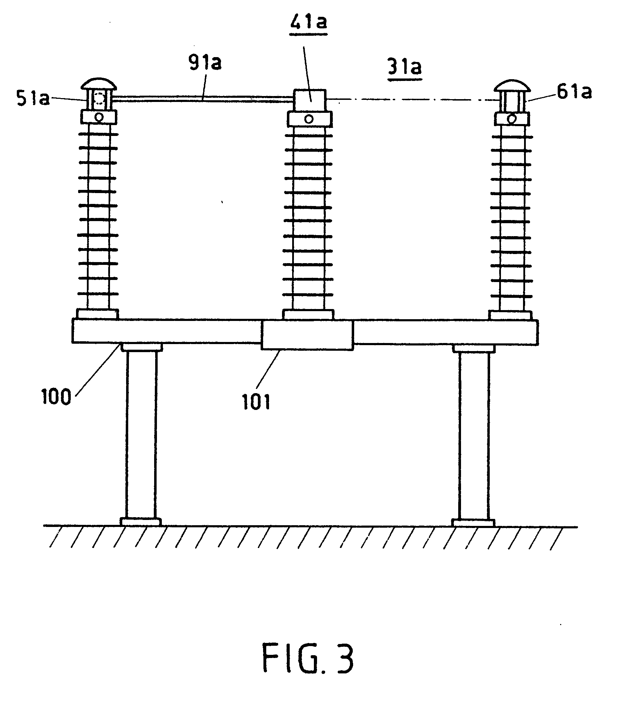

Der in Fig. 3 dargestellte Doppeltrennschalter 31a ist in Freilufttechnik ausgeführt und ist auf einem Gestell 100 angebracht, welches auch einen Antrieb 101 für das als drehbares Trennmesser ausgebildete Kontaktteil 91a trägt. Die Kontakte 41a, 51a und 61a sind auf nicht bezeichneten Porzellanisolatoren angebracht. Der Mittelkontakt 41a ist mit dem Knotenpunkt 1 über ein nicht dargestelltes Leiterseil verbunden.

Selbstverständlich ist die Schaltanlage nicht auf sechs Knotenpunkte beschränkt, sondern kann lediglich drei, vier oder fünf oder aber auch mehr als sechs Knotenpunkte aufweisen und ferner kann durch Einfügung weiterer Leistungsschalter c, d, ... und Doppeltrennschalter 31c, 32c, ..., 31d, 32d, ..., die Redundanz der Anlage entsprechend erhöht werden. Darüber hinaus ist es nicht notwendig, daß die Doppeltrennschalter die Trennfunktion in den Brückenzweigen übernehmen, vielmehr ist es auch möglich, jeden der Doppeltrennschalter durch zwei Trennschalter zu ersetzen, deren einer Kontakt mit einem der Knotenpunkte verbunden ist.

Für eine Schaltanlage mit n Knotenpunkten werden bei einem einfach redundanten Ring insgesamt n + 1 Leistungsschalter sowie Stromwandler, 3 n Trennschalter und n Doppeltrennschalter und bei einem zweifach redundanten Ring n + 2 Leistungsschalter sowie Stromwandler 3 n Trennschalter und 2 n Doppeltrennschalter benötigt. Die physische Anordnung dieser Apparate kann entsprechend dem Schaltschema gemäß Fig. 1 sein.

**Patentansprüche**

1. Schaltanlage mit n über unterbrechbare Stromzweige (11, 12, ..., 16) in Form eines Ringes geschalteten Knotenpunkten (1, 2, ..., 6), bei der jeder Knotenpunkt (z. B. 1) über mindestens zwei Brückenzweige mit mindestens zwei der anderen Knotenpunkte (z. B. 5, 6) verbindbar ist und bei der jeder der mindestens zwei Brückenzweige einen Trennschalter und je einen diesen mindestens zwei Brückenzweigen gemeinsamen Leistungs- (a) und Trennschalter aufweist, wobei jeder Knotenpunkt (z. B. 1) mit einem ersten der beiden Kontakte jeweils eines Trennschalters aus jeder von mindestens zwei Gruppen von je n Trennschaltern verbunden ist und wobei der erste Kontakt des Leistungsschalters (a) mit den n zweiten Kontakten der Trennschalter der ersten der mindestens zwei Gruppen und der zweite Kontakt des Leistungsschalters (a) mit den n zweiten Kontakten der Trennschalter der zweiten der mindestens zwei Gruppen in Verbindung steht.

2. Schaltanlage nach Anspruch 1, dadurch gekennzeichnet, daß ein Trennschalter aus der ersten und ein Trennschalter aus der zweiten Gruppe von Trennschaltern in einem Doppeltrennschalter (z. B. 31a) enthalten sind, dessen beweglicher Mittelkontakt (z. B. 41a) mit einem der Knotenpunkte (z. B. 1) verbunden ist, und dessen feststehenden beiden Außenkontakte (z. B. 51a, 61a) an je einen der Kontakte des Leistungsschalters (a) angeschlossen sind.

3. Schaltanlage nach Anspruch 2, dadurch gekennzeichnet, daß alle Trennschalter der ersten und zweiten Gruppe von Trennschaltern in Doppeltrennschaltern (31a, 32a, . . .,) enthalten sind, deren bewegliche Mittelkontakte (41a, 42a, . . .) jeweils mit einem der Knotenpunkte (z. B. 1) verbunden sind, und deren feststehende Außenkontakte (51a, 52a, . . ., 56a; 61a, . . ., 66a) über zwei jeweils als Sammelschiene ausgebildete Anschlußleitungen (71a, 72a) an je einen der Kontakte des Leistungsschalters (a) angeschlossen sind (Fig. 1, Fig. 2).

4. Schaltanlage nach Anspruch 3, dadurch gekennzeichnet, daß mindestens einer der Doppeltrennschalter (31a) am Mittelkontakt (41a) ein drehbares Trennmesser (91a) enthält (Fig. 3).

5. Schaltanlage nach einem der Ansprüche 1 bis 4, dadurch gekennzeichnet, daß jeder Knotenpunkt (z. B. 1) zusätzlich mit einem ersten der beiden Kontakte jeweils eines Trennschalters aus jeder von mindestens zwei weiteren Gruppen von je n Trennschaltern verbunden ist, und daß der erste Kontakt eines weiteren Leistungsschalters (b) mit den n zweiten Kontakten der Trennschalter einer dritten der mindestens zwei weiteren Gruppen und der zweite Kontakt des weiteren Leistungsschalters (b) mit den n zweiten Kontakten der Trennschalter einer vierten der mindestens zwei weiteren Gruppen in Verbindung steht.

## Claims

1. Switching system comprising n nodes (1, 2, . . . 6), which are connected in the form of a ring via interruptable current branches (11, 12, . . . 16), in which system each node (for example 1) can be connected via at least two bridge branches to at least two of the other nodes (for example 5, 6) and in which system each of the at least two bridge branches is provided with an isolating switch and one circuit breaker (a) and isolating switch common to these at least two bridge branches, characterised in that each node (for example 1) is connected to a first one of the two contacts of in each case one isolating switch of each of at least two groups of n isolating switches each and that the first contact of the circuit breaker (a) is connected to the n second contacts of the isolating switches of the first one of the at least two groups and the second contact of the circuit breaker (a) is connected to the n second contacts of the isolating switches of the second one of the at least two groups.

2. Switching system according to claim 1, characterised in that an isolating switch from the first group of isolating switches and an isolating switch from the second group are contained in a dual isolating switch (for example 31a) the moving centre contact of which (for example 41a) is connected to one of the nodes (for example 1) and the fixed two outer contacts of which (for example 51a, 61a) are connected to one each of the contacts of the circuit breaker (a).

3. Switching system according to claim 2, characterised in that all isolating switches of the first and second groups of isolating switches are contained in dual isolating switches (31a, 32a, . . .,) the moving centre contacts of which (41a, 42a, . . .) are in each case connected to one of the nodes (for example 1) and the fixed outer contacts of which (51a, 52a . . ., 56a; 61a, . . ., 66a) are connected via two connecting lines (71a, 72a), which are in each case constructed as a busbar, to one each of the contacts of the circuit breaker (a) (fig. 1, fig. 2).

4. Switching system according to claim 3, characterised in that at least one of the dual isolating switches (31a) contains a rotatable isolating blade (91a) at the centre contact (41a) (fig. 3).

5. Switching system according to one of claims 1 to 4, characterised in that each node (for example 1) is additionally connected to a first one of the two contacts of in each case one isolating switch from each of at least two further groups of n isolating switches each and that the first contact of a further circuit breaker (b) is connected to the n second contacts of the isolating switches of a third one of the at least two further groups and the second contact of the further circuit breaker (b) is connected to the n second contacts of the isolating switches of a fourth one of the at least two further groups.

## Revendications

1. Installation de commutation comportant n noeuds (1, 2, . . . 6) connectés en boucle par l'intermédiaire de dérivations pouvant être interrompues (11, 12, . . . 16), pour laquelle, chaque noeud (par exemple 1) peut être connecté par l'intermédiaire d'au moins deux branches de pont à au moins deux des autres noeuds (par exemple 5, 6) et pour laquelle chacune des au moins deux branches de pont comporte un coupe-circuit et chaque fois un interrupteur de puissance (a) et un coupe-circuit commun à ces au moins deux branches de pont, étant entendu que chaque noeud (par exemple 1) est connecté à un premier des deux contacts de chaque fois un coupe-circuit de chacun d'au moins deux groupes de chaque fois n coupe-circuits et que le premier contact de l'interrupteur de puissance (a) est connecté aux n seconds contacts des coupe-circuits du premier des au moins deux groupes et le second contact de l'interrupteur de puissance (a) est connecté aux n deuxièmes contacts des coupe-circuits du second des au moins deux groupes.

2. Installation de commutation suivant la revendication 1, caractérisé en ce qu'un coupe-circuit du premier groupe et un coupe-circuit du deuxième groupe sont contenus dans un coupe-circuit double (par exemple 31a) dont le contact médian mobile (par exemple 41a) est connecté à un des noeuds (par exemple 1) et dont les deux contacts extérieurs fixes (par exemple 51a, 61a) sont connectés chaque fois à un des contacts de l'interrupteur de puissance (a).

3. Installation de commutation suivant la revendication 2, caractérisé en ce que tous les coupecircuits du premier et du second groupe sont contenus dans des coupe-circuits doubles (31a, 32a, . . .) dont les contacts médians mobiles (41a, 42a) sont connectés chaque fois à un des noeuds (par exemple 1) et dont les contacts extérieurs fixes (51a, 52a, . . . 56a; 61a, . . . 66a) sont connectés, par l'intermédiaire de deux lignes de connexion (71a, 72a) ayant chaque fois la forme de barres omnibus, chaque fois à un des contacts de l'interrupteur de puissance (a) (fig. 1, fig. 2).

4. Installation de commutation suivant la revendication 3, caractérisée en ce qu'au moins un des coupe-circuits doubles (31a) contient, au niveau du contact médian (41a), un couteau sectionneur pivotant (91a) (fig. 3).

5. Installation de commutation suivant l'une quelconque des revendications 1 à 4, caractérisée en ce que chaque noeud (par exemple 1) est connecté, en outre, à un premier des deux contacts de chaque fois un coupe-circuit de chacun d'au moins deux autres groupes de chaque fois n coupe-circuits, et le premier contact d'un autre interrupteur de puissance (b) est connecté aux n seconds contacts du coupe-circuit d'un troisième des au moins deux autres groupes et le second contact de l'autre interrupteur de puissance (b) est connecté aux n seconds contacts des coupe-circuits d'un quatrième des au moins deux autres groupes.

FIG.1

FIG. 2

FIG. 3